Europäisches Patentamt

European Patent Office

Office européen des brevets

(11) Numéro de publication: **0 093 041**

**A1**

## (12) DEMANDE DE BREVET EUROPEEN

(21) Numéro de dépôt: **83400767.6**

(22) Date de dépôt: **19.04.83**

(51) Int. Cl.³: **H 02 K 9/19**

(30) Priorité: **23.04.82 FR 8206987**

(43) Date de publication de la demande:
**02.11.83 Bulletin 83/44**

(84) Etats contractants désignés:
**DE FR GB IT NL SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Moretti, Antonio**
**48, rue des Cuffins**
**F-78380 Bonnelles(FR)**

(72) Inventeur: **Banon, Louis**
**7, rue Cognacq-Jay**
**F-75007 Paris(FR)**

(54) **Machine électrodynamique synchrone à aimants permanents et refroidie par un liquide.**

(57) La présente invention a pour objet une machine électro-dynamique (10) refroidie par un liquide contenu dans un carter (12) dans lequel est monté un stator (14) dont la paroi périphérique interne (16) coopère avec la paroi périphérique externe (20) d'un rotor monté tournant dans le carter (12) pour définir entre elles un entrefer (22) dans lequel circule ledit fluide. La machine selon l'invention est caractérisée en ce que les parois périphériques (16, 20) sont cylindriques et en ce que leur surface en contact avec le liquide de refroidissement est continue et lisse afin de minimiser les pertes énergétiques dues au laminage du liquide de refroi-dissement.

Application au refroidissement des machines électrody-namiques.

FIG.1

EP 0 093 041 A1

## MACHINE ELECTRODYNAMIQUE SYNCHRONE A AIMANTS PERMANENTS ET REFROI-DIE PAR UN LIQUIDE

La présente invention a pour objet une machine électrodynamique refroidie par un liquide contenu dans un carter dans lequel est monté un stator dont la paroi périphérique interne coopère avec la paroi périphérique externe d'un rotor immergé monté tournant dans le carter pour définir entre elles un entrefer dans lequel circule ledit liquide.

La présente invention vise plus particulièrement les machines électriques synchrones excitées par aimants permanents dont les parties actives statoriques et rotoriques sont immergées dans un liquide de refroidissement.

Les machines électrodynamiques consistent essentiellement en un rotor et un stator qui comportent des éléments conducteurs qui dégagent de la chaleur. Pour augmenter les performances de ces machines, il est nécessaire d'assurer l'évacuation de la chaleur dégagée par la résistance des conducteurs à la circulation du courant et des pertes fer. Dans ce but, on a proposé de refroidir les machines par refoulement d'air dans les encoches du rotor et autour de la périphérie de ce dernier. L'inconvénient de ces systèmes est que le transfert de chaleur entre les conducteurs qui dégagent de la chaleur et l'air est insuffisant pour assurer un refroidissement convenable.

On a également proposé d'effectuer le refroidissement à l'aide d'un liquide, mais les solutions adoptées n'ont pas donné les résultats attendus pour les raisons suivantes : lorsque le liquide de refroidissement pénètre dans l'entrefer séparant le rotor et le stator, il en résulte une amélioration de l'efficacité du refroidissement, mais les pertes par freinage de la rotation sont importantes et sont la cause de pertes de puissance.

Les systèmes qui empêchent le liquide de pénétrer dans l'entrefer compris entre le rotor et le stator le font en canalisant le fluide de refroidissement sur une partie restreinte du rotor et utilisent le transfert de la chaleur des conducteurs vers le liquide de refroidissement par la structure de fixation de ces conducteurs. Dans ces systèmes, les pertes de puissance sont réduites mais l'efficacité du refroidissement est faible si on la compare avec celle obtenue lorsque le liquide est en contact avec l'ensemble des corps chauds.

Le refroidissement des parties internes par des agents liquides ou gazeux nécessite également le plus souvent des dispositions géométriques particulières telles que rainures, fentes, conducteurs creux, arbres creux, de façon à obtenir l'effet de refroidissement le plus efficace, qui sont fort coûteuses à réaliser. De plus, à ces dispositions géométriques, on associe généralement des dispositifs de mise en mouvement du liquide de refroidissement et des appareillages de surveillance et de régulation.

Les machines du type synchrone excitées par aimants permanents présentent de nombreuses qualités rendant l'immersion des parties actives particulièrement intéressante et notamment :

- absence de contacts électriques glissants donc pas de précautions spécifiques à prendre en ce qui concerne l'isolement et le filtrage du liquide de refroidissement ;

- absence de chignons rotoriques qui engendreraient d'importantes pertes par brassage ;

- absence de pertes rotoriques dans les machines à rotor feuilleté ; dans une machine à entrefer non immergé dans un fluide de haute conductibilité thermique, l'entrefer constitue une importante résistance thermique empêchant le flux de chaleur de s'écouler par le rotor ; ce dernier ne participe donc pas à l'échange de chaleur, sa température moyenne est très supérieure à celle du stator.

D'autre part, les conducteurs statoriques, au contact de l'entrefer sont très mal refroidis si l'entrefer n'est pas immergé. Il
s'ensuit des fusions fréquentes de ces conducteurs lorsqu'on impose un courant important pour obtenir un fort couple.

Les machines synchrones à aimants permanents connaissent aujourd'hui de nombreuses applications dans le domaine des robots et
des machines-outils. Dans ces applications, les cycles de fonctionnement comportent un temps important de travail à fort couple
maintenu donc sans brassage du fluide. D'autre part, les couples
importants sont requis aux vitesses faibles pour une mise en
vitesse rapide.

Enfin, dans l'optique de s'affranchir de réducteurs de rapports
élevés coûteux et peu précis, les utilisateurs requièrent des
machines tournant à faible vitesse mais toujours avec de fortes
valeurs de couple et de puissance. L'immersion totale des parties
actives des machines dans un fluide de refroidissement s'avère
donc une solution porteuse d'un grand avenir.

Ces différentes qualités permettent de pousser la machine à des
densités de courant très élevées en s'opposant à la formation de
points chauds grâce à la diminution de la résistance thermique
vue de la source de chaleur.

L'invention a pour but de proposer une machine électrodynamique
synchrone à aimants permanents et refroidie efficacement par
liquide dans laquelle les pertes de puissance utiles sont rendues
négligeables ou maintenues à une valeur souhaitée.

Dans ce but, l'invention propose une machine électrodynamique du
type décrit plus haut, caractérisée en ce que les parois

49398 1 1676

périphériques interne et externe du stator et du rotor sont cylindriques et leur surface en contact avec le liquide de refroidissement est continue et lisse.

On comprend que grâce à une telle caractéristique, les pertes énergétiques dues au laminage du liquide de refroidissement sont réduites à un niveau négligeable et que le contact de ce dernier avec les corps chauds à refroidir est grandement amélioré.

On décrira maintenant à titre d'exemple un mode de réalisation de la présente invention en se référant aux dessins annexés dans lesquels :

- la figure 1 est une vue en coupe axiale d'une machine électrodynamique selon la présente invention ;

- la figure 2 est une vue en coupe axiale du rotor de la machine représentée à la figure 1 ;

- la figure 3 est une vue en coupe selon la ligne 3 - 3 de la figure 2 ;

- la figure 4 est une vue en coupe axiale du stator de la machine représentée à la figure 1 ; et

- la figure 5 est une vue en coupe selon la ligne 5 - 5 de la figure 4.

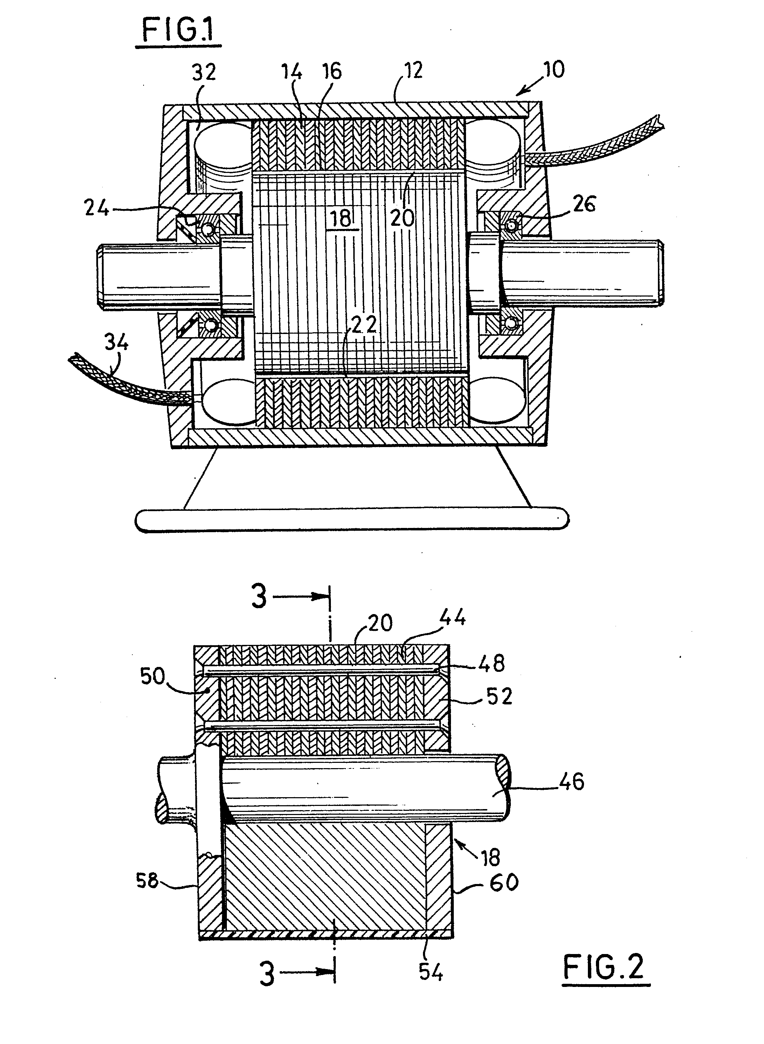

La machine électrodynamique 10, représentée à la figure 1, comprend un carter 12 dans lequel est monté un stator 14 dont la paroi périphérique interne 16 coopère avec la paroi périphérique externe 20 d'un rotor 18 monté dans le carter 12 pour définir entre elles un entrefer 22. Le rotor 18 est monté tournant dans le carter 12 au moyen de deux paliers 24 et 26 comportant chacun un roulement.

La cavité interne 32 du carter 12, dans laquelle sont montés le stator 14 et le rotor 18, est remplie avec un liquide de refroidissement qui peut être par exemple de l'huile ou de l'eau. Le rotor 18 ainsi que l'ensemble du stator 14 sont ainsi complètement immergés dans le fluide de refroidissement qui peut être introduit dans la cavité 32 grâce à des conduits 34.

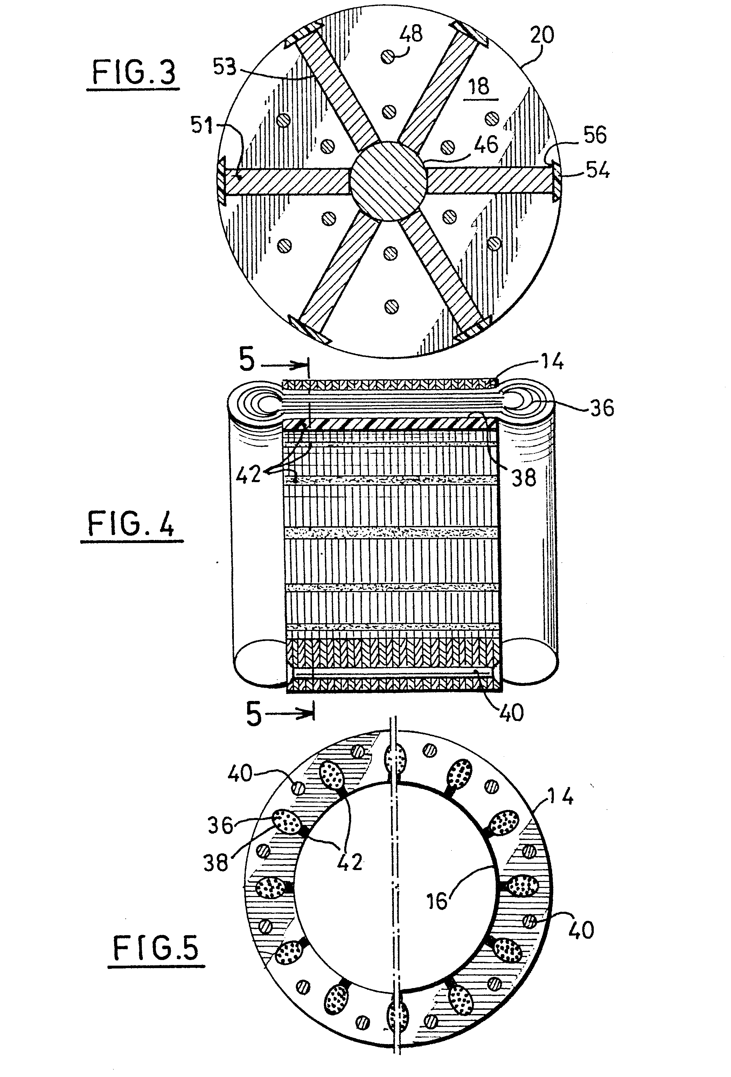

Le stator 14 représenté aux figures 4 et 5 comprend un enroulement principal de stator 36 disposé dans des encoches 38 et des canaux de refroidissement axiaux 40 dans lesquels le liquide de refroidissement peut circuler.

Selon l'invention, la paroi périphérique interne 16 du stator 14 est cylindrique et sa surface est lisse et continue. Dans le mode de réalisation représenté, et comme on peut le constater à la figure 5, la paroi interne 16 est obtenue par surmoulage d'un matériau 42 qui vient remplir les parties débouchantes des encoches 38. A titre de variante possible et comme on l'a représenté, sur un quart de la circonférence le matériau de surmoulage peut recouvrir la totalité de la paroi périphérique interne du stator. Si l'état de la surface ainsi obtenue par surmoulage n'est pas parfait, il peut être amélioré par une reprise d'usinage du stator 14 à l'aide de tous moyens appropriés.

Le rotor 18 représenté aux figures 2 et 3 est constitué par un empilement de tôles magnétiques 44 enfilées sur un arbre 46 et maintenues serrées par des tirants 48 entre deux flasques amagnétiques 50 et 52. Comme représenté, le flasque 50 peut être venu de matière avec l'arbre 16. Le rotor 18 comprend également des aimants 51 montés dans des encoches 53. Le maintien des aimants 51 dans les encoches 53 est obtenu grâce à des éléments 54 rapportés dans des évidements 56 formés aux extrémités des encoches 53.

Selon l'invention, la paroi périphérique externe 20 du rotor 18 est cylindrique et sa surface est lisse et continue. Dans le mode de réalisation représenté, la paroi externe 20 lisse et continue a été obtenue par surmoulage d'un matériau notamment dans les évidements 56, le matériau de surmoulage étant dans ce cas constitutif des éléments 54. La parfaite continuité de la surface a en outre été assurée par une reprise d'usinage de la surface externe du rotor après surmoulage.

Selon une autre caractéristique de l'invention, et afin d'améliorer encore le refroidissement du moteur, les deux faces radiales 58, 60 latérales, délimitant axialement le rotor 18, sont lisses et continues. Dans le mode de réalisation représenté, les faces latérales 58 et 60 sont constituées par les faces externes des flasques latéraux 50 et 52.

La disposition des formes et des surfaces définissant l'entrefer et en contact avec le liquide est ainsi calculée pour que l'énergie absorbée par frottement visqueux entre le liquide et les parties tournantes soit inférieure à une valeur souhaitée, généralement imposée par le cahier des charges, et ce pour des hautes vitesses de rotation y compris la vitesse maximum.

Afin d'assurer un meilleur refroidissement de la machine électrodynamique 10, il est souhaitable que le liquide de refroidissement remplisse complètement la cavité 32 et que celle-ci soit parfaitement purgée de l'air qu'elle pourrait contenir. Il est souhaitable de prévoir un dispositif de circulation forcée du liquide de refroidissement qui permette d'engendrer une vitesse suffisante de circulation et d'assurer son passage dans l'entrefer, un échangeur thermique externe pouvant être prévu sur le circuit de circulation. Toutefois, étant données les bonnes performances de refroidissement obtenues dans les machines réalisées selon les enseignements de la présente invention, il peut ne pas être nécessaire de prévoir une circulation du fluide à l'extérieur du carter dans un échangeur thermique, il suffit que les conduits 34 soient reliés à un dispositif tampon (non représenté) permettant d'absorber les dilatations du liquide de refroidissement.

REVENDICATIONS

1. Machine électrodynamique (10) synchrone à aimants permanents et refroidie par un liquide contenu dans un carter (12) dans lequel est monté un stator (14) dont la paroi périphérique interne (16) coopère avec la paroi périphérique externe (20) d'un rotor (18) monté tournant dans ledit carter (12) pour définir entre elles un entrefer (22) dans lequel circule ledit liquide, caractérisée en ce que lesdites parois périphériques (16, 20) sont cylindriques et en ce que leur surface en contact avec le liquide de refroidissement est continue et lisse afin de minimiser les pertes énergétiques dues au laminage du liquide de refroidissement.

2. Machine électrodynamique selon la revendication 1, caractérisée en ce que les deux faces radiales latérales (58, 60) délimitant axialement ledit rotor sont lisses et continues.

3. Machine électrodynamique selon l'une des revendications 1 ou 2, caractérisée en ce que ladite paroi périphérique interne (16) du stator (14) est obtenue par surmoulage.

4. Machine électrodynamique selon la revendication 1, caractérisée en ce que ladite paroi périphérique externe (20) du rotor (18) est obtenue par surmoulage.

5. Machine électrodynamique selon l'une quelconque des revendications 1 ou 3, caractérisée en ce que ladite paroi périphérique interne (16) du stator (14) est obtenue par reprise d'usinage.

6. Machine électrodynamique selon la revendication 1 ou 4, caractérisée en ce que ladite paroi périphérique externe (20) du rotor (18) est obtenue par reprise d'usinage.

49398 1 1676

FIG.1

FIG.2

FIG.3

FIG. 4

FIG.5

0093041

Office européen
des brevets

**RAPPORT DE RECHERCHE EUROPEENNE**

Numéro de la demande

EP 83 40 0767

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 087 126 (BRISSONNEAU) <br> * Page 5, lignes 12-39; page 6, lignes 11-18 * | 1-6 | H 02 K 9/19 |
| A | PATENTS ABSTRACTS OF JAPAN, vol. 6, no. 52(E-100)(930), 7 avril 1982 <br> & JP - A - 56 166 755 (HITACHI SEISAKUSHO K.K.) 22-12-1981 * Lignes 6-12 * | 1,4 | |
| A | DE-B-1 067 113 (SCHNEIDER) <br> * Colonne 3, lignes 6-13 * | 1 | |
| A | GB-A- 837 810 (GRAM-ELECTRIC) <br> * Page 2, lignes 15-19 * | 1 | |

DOMAINES TECHNIQUES
RECHERCHES (Int. Cl. ³)

H 02 K

Le présent rapport de recherche a été établi pour toutes les revendications

| Lieu de la recherche | Date d'achèvement de la recherche | Examinateur |
|---|---|---|
| LA HAYE | 22-06-1983 | STEINMETZ L.J.P. |